## Europäisches Patentamt
## European Patent Office
## Office européen des brevets

(19)

(11) Publication number: **0 093 781**
**B1**

(12)

# EUROPEAN PATENT SPECIFICATION

(45) Date of publication of patent specification: **11.03.87**

(51) Int. Cl.⁴: **G 03 H 1/04,** G 02 B 5/32

(21) Application number: **81903067.7**

(22) Date of filing: **13.11.81**

(86) International application number:
**PCT/JP81/00332**

(87) International publication number:
**WO 83/01845 26.05.83 Gazette 83/13**

(54) **METHOD OF MANUFACTURING IN-LINE HOLOGRAM LENS.**

(43) Date of publication of application:
**16.11.83 Bulletin 83/46**

(45) Publication of the grant of the patent:
**11.03.87 Bulletin 87/11**

(84) Designated Contracting States:
**DE FR GB NL**

(56) References cited:
**JP-A-51 147 339**
**JP-A-53 106 148**
**JP-A-55 147 655**
**JP-A-56 161 581**
**JP-U-52 108 941**

(73) Proprietor: **SONY CORPORATION**
**7-35 Kitashinagawa 6-Chome Shinagawa-ku**
**Tokyo 141 (JP)**

(72) Inventor: **KOJIMA, Chiaki**
**Sony Corp. 7-35, Kitashinagawa 6-chome**
**Shanagawa-ku Tokyo 141 (JP)**
Inventor: **HASEGAWA, Kayoko "Patent Division"**
**Sony Corp. 7-35, Kitashinagawa 6-chome**
**Shanagawa-ku Tokyo 141 (JP)**
Inventor: **MIYAHARA, Kousuke "Patent Division"**
**Sony Corp. 7-35, Kitashinagawa 6-chome**
**Shanagawa-ku Tokyo 141 (JP)**

(74) Representative: **Thomas, Christopher Hugo**
**et al**
**D Young & Co 10 Staple Inn**
**London WC1V 7RD (GB)**

EP 0 093 781 B1

## Description

This invention relates to methods of producing in-line hologram lenses and to in-line hologram lenses so produced.

Known hologram lenses comprise in-line hologram lenses and off-axis hologram lenses. The recording and reproducing theory of these two hologram lenses will be briefly described.

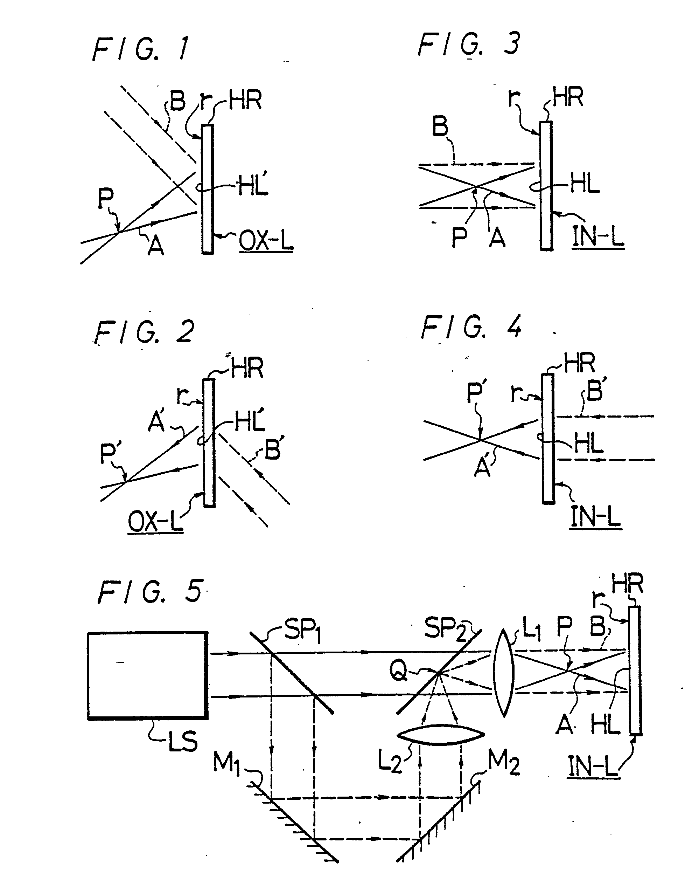

First, an off-axis hologram lens will be described. As shown in Figure 1 of the accompanying drawings, a recording surface (photo-sensitive surface) r of a hologram recording medium HR is irradiated with a recording subject wave beam (spherical wave beam) A and a recording reference wave beam (plane or spherical wave beam) B, each at an incident angle of about 45° with respect to the normal direction, namely, each being off-axis, thereby to record an off-axis hologram lens portion HL' of, for example, circular or elliptical shape, which consists of interference images. The recording subject wave beam A is provided by using an optical lens, and is a beam which converges at a point P and diverges after it. Both the beams A and B are formed from a laser beam emitted from the same laser light source. Thus, an off-axis hologram lens OX-L is formed.

When the off-axis hologram lens OX-L is reproduced, as shown in Figure 2 of the accompanying drawings, a reproducing reference wave beam B' similar to the beam B is irradiated on the off-axis hologram lens portion HL' from the side opposite to the recording surface r of the recording medium HR along the extended direction of the recording reference wave beam B shown in Figure 1. Then, a reproducing subject wave beam A' is reproduced from the side of the recording face r and converges to a point P'. When the reproducing reference wave beam is irradiated on the recording surface r of the recording medium HR, as the recording reference wave beam B in Figure 1, but different from that of Figure 2, a reproducing subject wave beam is reproduced from the surface of the recording medium HR opposite to the recording surface r, and diverges along the extended direction of the recording subject wave beam A in Figure 1.

An in-line hologram lens will now be described. As shown in Figure 3 of the accompanying drawings, the recording subject wave beam (spherical wave beam) A and the recording reference wave beam (plane or spherical wave beam) B are irradiated on the recording surface r of the hologram recording medium HR, which beams have coincident optical axes in the direction of the normal, that is, in line with each other, to form thereon an in-line hologram lens portion HL consisting of interference images. The other arrangements are the same as those in Figure 1. Thus, an in-line hologram lens IN-L is formed.

When the in-line hologram lens IN-L is reproduced, as shown in Figure 4 of the accompanying drawings, a reproducing reference wave beam B' similar to the beam B is irradiated on the in-line hologram lens portion HL from the side opposite to the recording surface r of the recording medium HR along the extended direction of the recording reference wave beam B in Figure 3, a reproducing subject wave beam A' is reproduced from the recording surface r which converges at a point P'. In this case, it is also possible that the reproducing reference wave beam is irradiated on the recording surface r of the hologram recording medium HR to reproduce the diverging subject wave beam. The other arrangements are the same as those in Figure 2.

The hologram lenses thus made are light in weight and small in size. Moreover, by selecting a mother lens which emits a subject wave beam, it is possible to provide a lens with a required N.A. (numerical aperture) and operating distance, and it is also possible to mass-produce lenses with the same characteristics by duplication.

An objective lens, which is used, for example, in an optical signal reproducing head in an optical signal reproducing apparatus, has a rather larger N.A., and in the prior art an optical lens comprising a plurality of lens groups similar to the objective lens of a microscope, is widely used. However, such an objective lens cannot be made small in size and light in weight, so that a focusing servo for moving the objective lens up and down requires substantive mechanical energy, and the servo apparatus becomes complicated and large in size.

Therefore, it would be advantageous to use a hologram lens as the objective lens of the optical signal reproducing head. However, the off-axis hologram lens is not preferred for the following reasons.

Because the objective lens is moved up and down by the focussing servo, it is required that the reproducing reference wave beam is simultaneously moved up and down in parallel, so as positively to be irradiated on the lens portion of the off-axis hologram lens. However, in the case of the in-line hologram lens, if the optical axis is parallel to the normal of the in-line hologram lens portion, the direction of the movement of the lens is coincident with the direction of the reproducing reference wave beam, so that the above movement is not necessary.

Another reason is that the off-axis hologram lens must be rotated and adjusted for the reproducing reference wave beam about three perpendicular axes with a precision of about ±0.5°, to bring the converging point of the reproducing subject wave beam and the optical axis to a predetermined position. This adjustment is very complicated and almost impossible when the N.A. of the lens is large. An in-line hologram lens is almost free from the above difficult adjustment, so an in-line hologram lens is preferred for the objective lens of the optical signal reproducing head.

A known recording method (cf. GB—A—2049986) for an in-line hologram lens will now be described in more detail with reference to Figure 5 of the accompanying drawings. The recording subject wave beam A and the recording reference wave beam B, which are coincident in optical axis on the normal to the recording (photo-sensitive surface) surface r of the hologram recording medium HR, are irradiated on a circular area of the surface to form the in-line hologram lens portion HL which consists of interference images. Both the beams A and B are provided by the laser beam from a laser light source LS.

A recording subject wave beam A is formed in the following manner. A part of the laser beam (plane wave beam) from the laser light source LS is irradiated through two beam splitters SP1 and SP2 on a mother lens (optical convex lens) L1 to produce a spherical wave beam which is focused at a point P (which corresponds to the rear focal point of the lens L1) and diverges therefrom, and which is used as the recording subject wave beam A. The recording reference wave beam B is formed in the following manner. A part of the laser beam from the laser light source LS is reflected on the beam splitter SP1, further reflected on two mirrors M1 and M2, and is then incident on an auxiliary lens (optical convex lens) L2. The beam emitted therefrom is focused at a centre point Q (which corresponds to the rear focal point of the lens L2) on the beam splitter SP2, and the beam reflected on and diffused by the beam splitter SP2 is introduced to the mother lens L1 to form the recording reference wave beam (which is a parallel plane wave beam) B.

The N.A. of the in-line hologram lens IN-L thus made depends upon the N.A. of the mother lens L1, so that when the in-line hologram lens IN-L is used as the objective lens of an optical signal reproducing head, it is necessary to select the N.A. of the in-line hologram lens IN-L rather large. Therefore, in this case, lenses with large N.A. must be of course used as the lenses L1 and L2.

When ordinary optical lenses are used as the lenses L1 and L2, a lens comprising a plurality of lens groups must be used, as in the objective lens of a microscope. As the N.A. becomes large, the focal points of the lenses L1 and L2 are positioned within the mirror cylinder, with the result that the recording method for an in-line hologram lens as shown in Figure 5 becomes impossible.

In order to avoid this problem, the following recording method can be used for an in-line hologram lens with large N.A. (see Japanese patent application laid-open 147339/76). That is, a beam splitter is provided in opposite relation to a hologram recording medium, an optical lens comprising a plurality of lens groups is located at the opposite side of the beam splitter as an objective lens, the laser beam from a laser light source is incident on the objective lens, the diverging beam emitted therefrom is irradiated on the hologram recording medium through the beam splitter as a recording subject wave beam, the laser beam is also incident on an auxiliary lens to be a recording reference wave beam, this recording reference wave beam is reflected on the above beam splitter, and then the reflected beam is irradiated on the hologram recording medium.

However, with the above recording method, since the recording subject wave beam (spherical wave beam) from the objective lens passes through the beam splitter, it is subjected to aberration. To avoid this defect, it is necessary that a special objective lens is used thereby to correct the aberration of the recording subject wave beam, or a similar beam splitter is provided upon reproduction. In practice, however, this is not preferred.

In view of this, we have previously published a method of easily producing an in-line hologram lens with a large N.A. (GB—A—2049986).

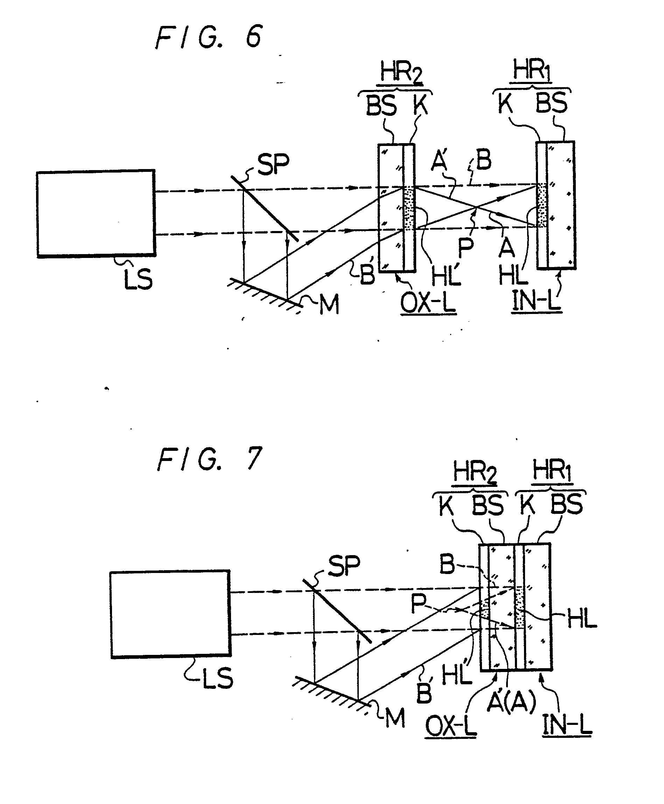

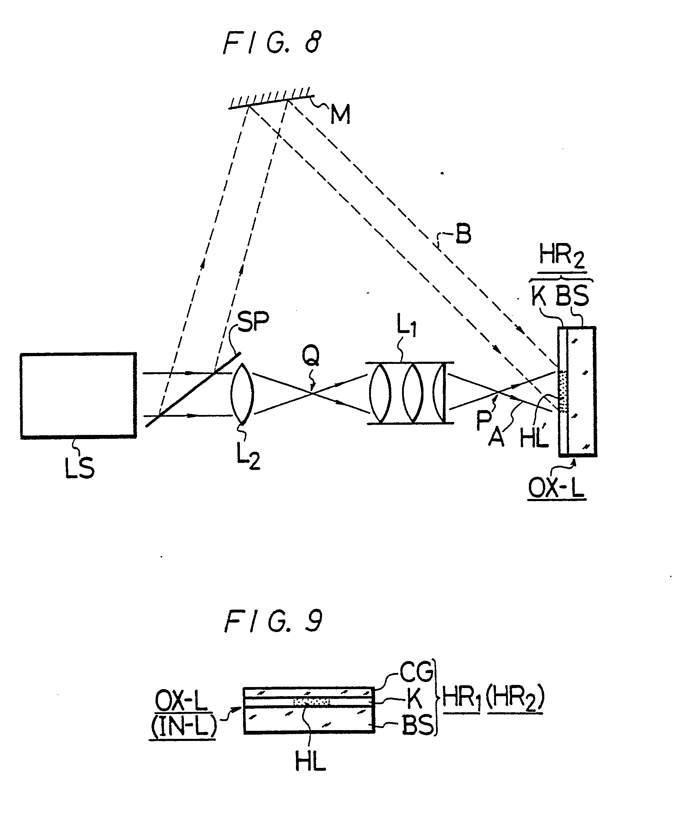

An example of this method of making an in-line hologram lens will be described with reference to Figure 6 of the accompanying drawings. An off-axis hologram lens OX-L, which is made by using a recording subject wave beam and a recording reference beam which are off-axis relative to each other, is used as a mother lens (objective lens). The method of making the off-axis hologram lens OX-L, particularly the recording method thereof will be described later with reference to Figure 8 of the accompanying drawings. The off-axis hologram lens OX-L is formed on a hologram recording medium HR2, which comprises a glass substrate BS and a photo-sensitive layer (recording layer) K coated thereon. On the centre portion of the photo-sensitive layer K, is recorded a disc-shaped off-axis hologram lens portion HL' which is then developed as described later. In this case, the off-axis hologram lens OX-L is so formed that when a reproducing reference wave beam (plane or spherical wave beam, in this example, a plane wave beam is used) is irradiated on the lens portion HL' in the photo-sensitive layer K through the glass substrate BS at an angle of about 45° with respect to the normal on the lens portion, a reproducing subject wave beam is reproduced from the photo-sensitive layer X, which has the optical axis on the normal and is focussed at a point P.

HR1 denotes a hologram recording medium on which an in-line hologram lens IN-L is to be recorded are formed, and which comprises a glass substrate BS and a photo-sensitive layer K.

The off-axis hologram lens OX-L, serving as the mother lens, faces the hologram recording medium HR1. In this case, the off-axis hologram lens OX-L is so located for the hologram recording medium HR1 that the photo-sensitive layer K of the off-axis hologram lens OX-L is parallel to the photo-sensitive layer K of the hologram recording medium HR1 at a predetermined spacing.

The laser beam (parallel plane wave beam) from a laser light source LS is partially reflected on a beam splitter SP, further reflected on a mirror M, and the reflected beam (parallel plane wave beam) is irradiated on the photo-sensitive layer K through the glass substrate BS of the off-axis hologram lens OX-L as the reproducing reference wave beam B'. Then, from the off-axis hologram lens OX-L is reproduced the reproducing subject wave beam A' which is focussed at a point P and then diverges therefrom. This beam is incident on the photo-sensitive layer K of the hologram recording medium HR1 as a recording subject wave beam A.

Meanwhile, the laser beam from the laser light source LS partially passes through the beam splitter SP, then through the off-axis hologram lens OX-L, and is incident on the photo-sensitive layer K of the hologram recording medium HR1 as a recording reference wave beam B which is in in-line relation to the recording subject wave beam A (namely, the optical axes thereof are coincident with each other). Thus, a disc-shaped in-line hologram lens portion HL is formed on the centre portion of the photo-sensitive layer K, which is then subjected to a developing process, which will be described later, to form an in-line hologram lens IN-L.

It is possible, as shown in Figure 7 of the accompanying drawings, for the glass substrate BS of the off-axis hologram lens OX-L serving as the mother lens to be in contact with the photo-sensitive layer K of the hologram recording medium HR1 disposed as in Figure 6, to carry out the recording of the lin-line hologram lens IN-L. In this case, the reproducing and recording subject wave beams A' and A are each a spherical wave beam which diverges from an imaginary point P.

Now, a description will be given with reference to Figure 8 of the known manner of making the off-axis hologram lens OX-L used as the mother lens. A recording subject wave beam (spherical wave) is irradiated on the photo-sensitive layer K of the hologram recording medium HR2, which comprises the photo-sensitive layer K and the glass substrate BS, in such a manner that the optical axis thereof is coincident with the normal thereto and a recording reference wave beam (parallel plane wave beam) B is also irradiated thereon in such a manner that its optical axis has an incident angle of about 45° with respect to the normal. Thus, a disc-shaped off-axis hologram lens portion HL' is recorded on the centre portion of the photo-sensitive layer K. Thereafter, the photo-sensitive layer K is developed to provide the off-axis hologram lens OX-L.

In this case, the recording subject wave beam A is produced in the following manner. That is, the laser beam (parallel plane wave beam) from a laser light source LS is partially passed through a beam splitter SP, is then incident on an auxiliary lens (optical lens) L2, and is then focussed at a point Q (the rear focal point of the lens L2). The spherical wave beam diverging therefrom is incident on a mother lens L1 (an optical lens made of a plurality of lens groups). Then, the spherical wave beam is provided which converges at a point P, and then diverges therefrom. This beam is used as the recording subject wave beam A.

The recording reference wave beam B is formed in the following manner. The laser beam from the laser light source LS is partially reflected on the beam splitter SP, and then further reflected on a mirror M to form the recording reference wave beam B.

An objective lens of a microscope with an N.A. of, for example, 0.4 or 0.5 is employed as the mother lens L1. The aperture of the off-axis hologram lens portion HL' is selected, for example, to be 2 mm in diameter, and the operating distance thereof is, for example, 2.3 mm. Accordingly, the in-line hologram lens portion HL of the in-line hologram lens IN-L shown in Figure 6 has an aperture and an operating distance which will be determined by a predetermined spacing between the point P and the in-line hologram lens portion HL shown in Figure 6.

As the laser light source LS used in Figures 6, 7 and 8, a laser light source may be used which produces one of the following laser beams:

| | |
|---|---|
| Argon laser beam | wavelength 488.0 nm |
| Krypton laser beam | wavelength 647.1 nm |
| Colouring laser beam | wavelength 633.0 nm |
| He—Ne laser beam | wavelength 632.8 nm |

The kind of photo-sensitive layers K of the hologram record media HR1 and HR2 shown in Figures 6, 7 and 8 is selected in accordance with the kind of laser beam.

Next, an example of making the hologram recording media HR1 and HR2, and the hologram lenses IN-L and OX-L shown in Figures 6, 7 and 8 will be described. A suitable amount of layer hardening agent such as an aqueous solution of gelatin with formaldehyde or gloxal added is kept at about 40°C, while a glass substrate with a thickness of 1 mm and a spinner are similarly kept at about 40°C. Then, the aqueous solution of gelatin is coated on the glass substrate using the spinner. The coating thickness of the gelatin aqueous solution is selected such that the thickness of the dried coating is 5 microns in the hologram recording medium for the off-axis hologram lens and 15 microns for the in-line hologram lens. The gelatin aqueous solution coated on the glass substrate is dried to form a gelatin layer which is a mother material of the photo-sensitive layer. Next, the process for making the gelatin layer photo-sensitive will be described.

Photo-sensitivity to a blue or green beam is given to the gelatin layer by immersing the gelatin layer in a 2 to 10 weight percent aqueous solution of ammonium bichromate for about ten minutes. It is then gradually removed therefrom, held vertically and dried in a darkroom.

Photo-sensitivity to a red beam is given to the gelatin layer using an aqueous solution containing 2 weight percent of ammonium bichromate and $1 \times 10^{-3}$ mol/l methylene blue pigment to which ammonium hydroxide is added to give a pH of about 10. The gelatin layer is immersed in this aqueous solution for about ten minutes and then dried in a flowing atmosphere including ammonia and dried nitrogen.

Thus, a hologram recording medium is formed having the photo-sensitive layer K formed on the glass substrate. The exposure for the photo-sensitive layer of the hologram recording medium is carried out as described in connection with Figures 6, 7 and 8. The irradiation energy of the laser beam is selected to be about 100 to 1000 mJ/cm².

The hologram recording medium, with the exposed photo-sensitive layer, is immersed in water. When the photo-sensitive layer is photo-sensitive to blue or green, it is immersed in flowing water at about 20°C for about one hour, and when the photo-sensitive layer is photo-sensitive to red, it is immersed in hot water at about 40°C for about thirty minutes. Thereafter, the hologram recording medium is immersed in an aqueous solution of 50 percent isopropanol for about ten minutes, then dipped in an aqueous solution of 90 percent isopropanol for several seconds, then immersed in 100 percent isopropanol for about ten minutes, and then rapidly dried by hot air. Thus, the developing treatment is finished.

A photo-sensitive layer, having a gelatin layer as mother material, has a moisture absorption property, so that if it is left as it is, there is a risk of the hologram lens disappearing. To avoid this, as shown in Figure 9 of the accompanying drawings, a cover glass CG of thickness about 150 microns is bonded to the photo-sensitive layer K by resin which is hardened by ultraviolet rays. Thus, the hologram lenses OX-L and IN-L are made. In the other drawings, the cover glass CG is not shown.

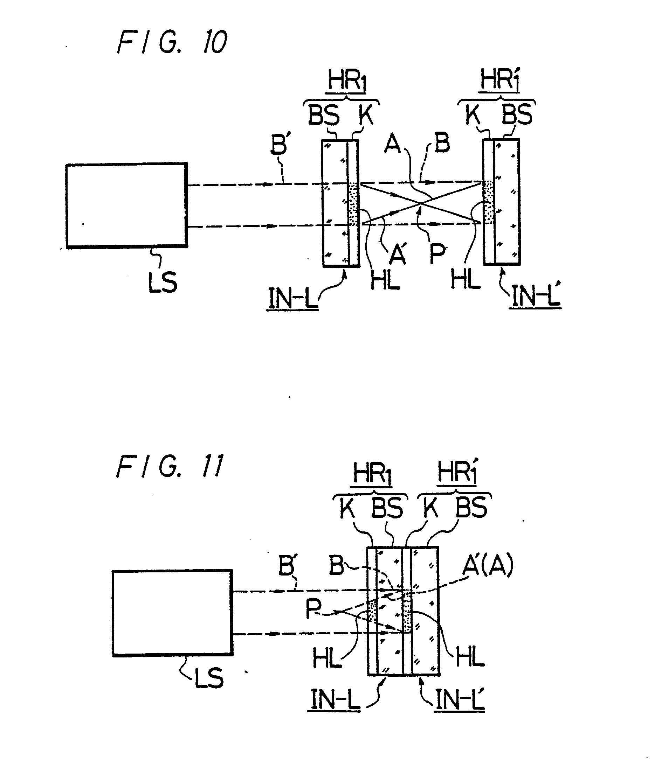

Subsequently, the known manner of making a slave in-line hologram lens IN-L' using the in-line hologram lens IN-L thus produced as the mother lens will be described. As shown in Figure 10 of the accompanying drawings, the hologram recording media HR1 and HR1' are so disposed that the photo-sensitive layer K of the latter, on which a slave in-line hologram lens IN-L' is to be made, faces the photo-sensitive layer K of the former, which has 50 percent diffraction efficiency, at a predetermined distance. Then, the laser beam from the laser light source LS is irradiated on the side of the glass substrate BS of the hologram recording medium HR1. A part of the beam (50 percent) is used as a reproducing reference wave beam B' and the remainder (50 percent) is used as a recording reference wave beam B for the hologram recording medium HR1'. Thus, from the mother in-line hologram lens IN-L, is reproduced a reproducing subject wave beam A' which is focussed at a point P and which is in turn irradiated on the hologram recording medium HR1' as a recording subject wave beam A, and a hologram lens portion HL is recorded on the photo-sensitive layer K.

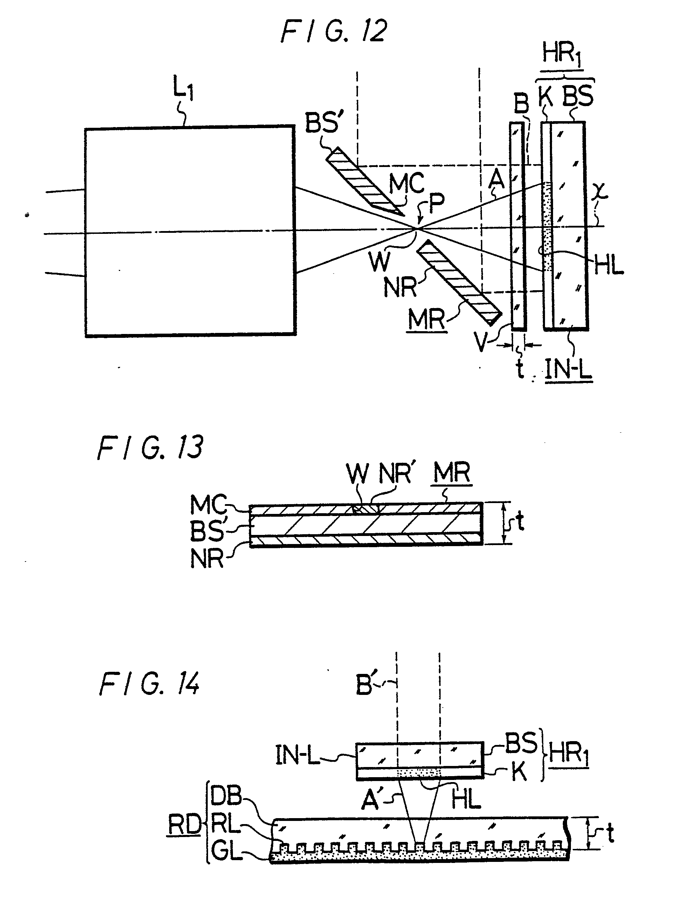

The slave in-line hologram lens IN-L' can also be made in the manner shown in Figure 11 of the accompanying drawings. In this case, the photo-sensitive layer K of the hologram recording medium HR1' located in the same order as in Figure 9 is in direct contact with the glass substrate BS of the mother in-line hologram lens IN-L. In this case, the reproducing and recording subject wave beams A' and A are both spherical wave beams diverging from an imaginary point P.

In the previously proposed method of producing an in-line hologram lens as described above, the off-axis hologram lens prepared in advance is used as the mother lens to form the in-line hologram lens. Then, if such a mother lens is provided the in-line hologram lens can be produced easily.

The above prior art manufacturing method, however, involves the following problems. Firstly, the extra process of making the off-axis hologram lens, which serves as the mother lens, is necessary.

Secondly, it is necessary that the off-axis hologram lens serving as the mother lens be rotated for the reproducing reference wave beam about three axes intersecting at right angles with each other, with an accuracy of ±0.5°, and adjusted for the focussing point and optical axis of the reproducing subject wave beam to be brought to a predetermined position. Such adjustments are very difficult, especially when the N.A. of the lens is large. This is caused by the fact that the distribution of the graphic interference patterns of the off-axis hologram lens is not axially symmetrical, unlike that of the in-line hologram lens, because the pitch of the graphic interference patterns changes from large to small in the radial direction.

Thirdly, owing to the distribution of the above graphic interference pattern of the off-axis hologram lens, when the thickness of the photo-sensitive gelatin layer increases during the moisture-involving process after the exposure of the photo-sensitive layer, the inclination of the graphic interference pattern on the cross-section thereof is varied and the characteristics of the lens thus become different. This phenomenon becomes significant as the N.A. of the off-axis hologram lens becomes large, and the hologram lens may not be usable in practice.

Japanese patent specification JP—U—52-108 941 discloses a method of producing an in-line hologram lens comprising irradiating a spherical wave beam through a small window of a mirror onto a hologram recording medium as a subject wave beam, and irradiating the wave beam reflected by the mirror onto the hologram recording medium as a reference wave beam.

According to the present invention there is provided a method of producing an in-line hologram lens, comprising the steps of:

irradiating a spherical wave beam from an optical element through a window in a full reflection mirror onto a hologram recording medium as a subject wave beam; and

irradiating a substantially plane wave beam reflected by said mirror onto said hologram recording medium as a reference wave beam;

characterised in that for producing a hologram lens for use as the objective lens of a reading head of an optical record player wherein a reading beam from said objective lens irradiates a record medium through a transparent substrate of said record medium, a transparent plate is placed into the light path so that, prior to impinging on said hologram recording medium, said spherical subject wave beam passes through the transparent plate the optical path length of which is selected to compensate for spherical aberration developed in said reading beam due to passing through said transparent substrate.

Using such a method, an in-line hologram lens with good accuracy can be obtained quite easily. It is unnecessary to prepare the off-axis hologram lens serving as the mother lens, so that the number of steps is reduced. Moreover, since the off-axis hologram lens is not necessary, a very accurate mother lens such as the objective lens of a microscope can be employed as the optical element, so that an in-line hologram lens of good accuracy can be provided.

Moreover, because an optical element radiates the spherical wave beam with no spherical aberration and the optical path length of the spherical aberration compensating plate (or small window of the full reflection mirror) is selected to be substantially equal to the thickness or the optical path length of the transparent member through which the reproducing beam for the optical recording medium passes, a reading beam with no spherical aberration can be produced in spite of the transparent member through which the reproducing beam for the record medium passes.

The invention will now be described by way of example with reference to the accompanying drawings, throughout which like parts are referred to by like references, and in which:

Figures 1 to 4 are diagrams showing known recording and reproducing methods for hologram lenses;

Figure 5 is a diagram showing the known recording method of an in-line hologram lens;

Figure 6 is a diagram illustrating an example of the recording method of the previously published in-line hologram lens producing method;

Figure 7 is a diagram showing another example of the recording method of the previously published in-line hologram lens producing method;

Figure 8 is a diagram showing one example of the recording method of the manufacturing method of the off-axis hologram lens which is used in Figures 6 and 7;

Figure 9 is a cross-sectional view of the hologram lens manufactured by the recording method of Figures 6, 7 or 8;

Figures 10 and 11 are diagrams showing duplicating recording of in-line hologram lenses;

Figure 12 is a diagram showing a recording method for an in-line hologram lens and according to the present invention;

Figure 13 is a cross-sectional diagram of a full reflection mirror;

Figure 14 is a diagram showing a part of optical information (signal) reproducing apparatus;

Figure 15 is an explanatory diagram of the operation of the in-line hologram lens; and

Figure 16 is a graph.

Referring to Figure 12, HR1 is a hologram recording medium on which the in-line hologram lens IN-L is recorded, and which comprises the glass substrate BS and the photo-sensitive layer (record layer) K thereon.

L1 represents an optical element (mother lens) for radiating the spherical wave beam, which utilizes an objective lens of a microscope with an N.A. of, for example, 0.4 or 0.5.

MR represents a full reflection mirror having a small window (light beam passing portion) W. BS' represents its transparent substrate (glass), MC a reflecting layer formed on its surface, and NR a non-reflecting layer formed on its back surface. In this case, the small window W is a through-hole formed through the centre of the mirror MR.

As shown in Figure 13, it is also possible for the full reflection mirror MR not to have the through-hole, but for a non-reflecting portion NR' to be formed at the centre of the reflecting layer MC to form the small window W provided the substrate has the correct thickness for serving as the compensation plate.

The mother lens L1 is located to oppose the hologram recording medium HR1, and the full reflection mirror MR is disposed therebetween. The hologram recording medium HR1 is so located that its photo-sensitive layer K faces the side of the mother lens L1. The full reflection mirror MR is so inclined that its reflecting layer MC faces the photo-sensitive layer K of the hologram recording medium HR1. According to Figure 12, a spherical aberration compensating plate (transparent plate) V which will be described later is located between the full reflection mirror MR and the hologram recording medium HR1 parallel to the hologram recording medium HR1.

A laser beam (parallel plane wave beam) from a common laser light source (for example, an argon, krypton, colouring or He—Ne laser light source), not shown, is converged at a certain point by a lens, not shown, to be a diverging spherical wave beam after that point, which diverging spherical beam is then incident on the mother lens L1 to be converged at the point P from which the spherical wave beam with no spherical aberration diverges. This diverging spherical wave beam is such that its optical axis X is coincident with respective normals to the compensating plate V and the photo-sensitive layer K of the hologram record medium HR1, and it passes through the small window W of the full reflection mirror MR at the point P and irradiates the photo-sensitive layer K of the hologram record medium HR1 through the compensating plate V as the recording subject wave beam A.

Further, after the laser beam (which is a parallel plane wave beam, but may be a spherical wave beam which is almost a plane wave) from the above common laser light source has been altered in direction by a beam splitter, mirror or the like, this plane wave beam is reflected by the full reflection mirror MR and is then incident through the compensating plate V on the photo-sensitive layer K of the hologram recording medium HR1 as a recording reference wave beam B. The recording subject wave beam A and the recording reference wave beam B are in in-line relation with each other. That is, each of optical axes X thereof is coincident with the normal to the photo-sensitive layer K of the hologram recording medium HR1, and the respective optical axes X are made coincident or parallel to each other as shown in the figure.

In this way, the in-line hologram lens portion HL of a disc-shape is formed on the centre of the photo-sensitive layer K of the hologram recording medium HR1, which is then subjected to a developing process as described above to form the in-line hologram lens IN-L.

The diameter of the small window W of the full reflection mirror MR may be selected in a range through which the recording subject wave beam A can be passed and small enough so as not to degrade the function of the in-line hologram lens IN-L. In this case, when the diameter of the in-line hologram lens portion HL is selected as 2 mm, the diameter of the small window W of the full reflection mirror MR is about 100 μm.

An optical information (signal) reproducing apparatus, which uses the in-line hologram lens produced by the method as described with reference to Figure 12 to reproduce a recorded information (signal) on an optical recording medium (disc), will now be described with reference to Figure 14. Also, a relationship between the optical recording medium and the spherical aberration compensating plate V will be described. RD designates an optical recording medium which comprises a transparent substrate DB (for example, made of vinyl chloride), a reflecting layer RL (for example, an aluminium diaphragm) coated to cover all the surface of pits and lands formed on the lower surface of the transparent substrate DB, and a protective layer GL (for example, PVA) coated on the lower surface of the reflecting layer RL to cover it.

The in-line hologram lens IN-L (which serves as an objective lens forming a part of the reproducing means) made by the manufacturing method of Figure 12 is so located that the photo-sensitive layer K thereof faces in parallel the recording medium RD at the side of the substrate DB. Then, the reproducing reference wave beam (plane wave beam) B' irradiates the in-line hologram lens portion HL from the side of the glass substrate BS of the in-line hologram lens IN-L, and the reproducing subject wave beam A' (the converging spherical wave beam focussed at the pit or land of the reflecting layer RL) thus obtained, irradiates, as the reproduction beam, the reflecting layer RL through the substrate DB from the back of the recording medium RD. The reflected wave beam from the reflecting layer RL goes back through the path of the beams A'—B' or (B') and impinges on a photo-electric conversion element (when the laser light source is a semiconductor laser light source the laser light source) so to be reproduced as an electrical signal.

In the case where the recording medium RD is optically reproduced from the side of its transparent substrate DB as shown in Figure 14, if the reproducing subject wave beam A' were a spherical wave beam with no spherical aberration, this spherical wave beam would be subject to spherical aberration when it passes through the transparent substrate DB of thickness t, which thickness t is the optical path length.

Therefore, in Figure 12, if the spherical wave beam with no spherical aberration is derived from the mother lens L1 and the thickness (optical path length) of the spherical aberration compensating plate V (when the full reflection mirror MR in Figure 13 is employed, the compensating plate V is not provided but the small window W of the full reflection mirror MR serves therefor) is selected to be substantially the afore-mentioned thickness t, the recording subject wave beam A in Figure 12 becomes a spherical wave beam with spherical aberration. Thus, the reproducing subject wave beam A' irradiating the recording medium RD becomes a beam with spherical aberration. When this beam passes through the transparent substrate DB, the beam has no spherical aberration, whereby the spherical aberration caused by the transparent substrate DB of the recording medium RD is corrected, so that a reflected wave beam with no spherical aberration can be obtained. In practice, the thickness t of the compensating plate V and that of the transparent substrate DB of the record medium RD may both be 1.1 mm and the refractive index thereof about 1.5.

Since the small window W is provided at the above full reflection mirror MR, the recording reference wave beam (reflection wave beam) B is partially lost at that portion. However, this will not significantly affect the manufacture of the in-line hologram lens IN-L, as will now be described.

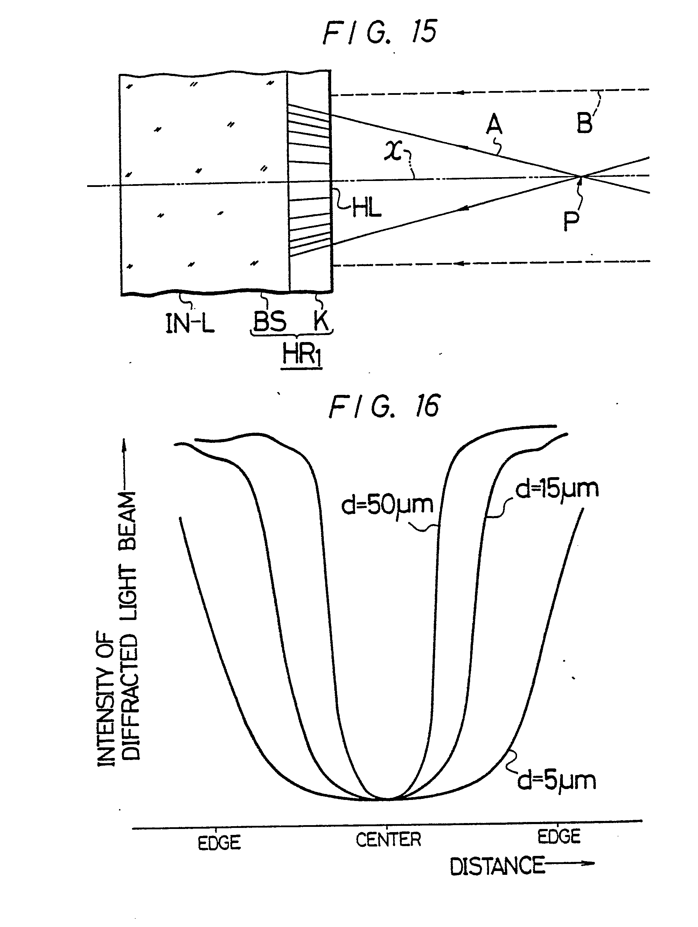

The in-line hologram lens IN-L is a kind of volume-type phase hologram lens. As shown in Figure 15, the grating surface formed of the graphic interference patterns on the in-line hologram lens portion HL which consists of the graphic interference patterns formed on the photo-sensitive layer K by the recording subject wave beam A and the recording reference wave beam B, each of which is in in-line relation with each other is coarsened in pitch at its centre, namely, in the portion closer to the optical axis X, while it becomes compressed in the portion closer to the periphery (edge) thereof.

If the volume-type phase in-line hologram lens satisfies the Bragg condition upon reproduction, its diffraction efficiency becomes a maximum. However, even if a reproducing beam which can satisfy the Bragg condition is employed, the diffraction efficiency cannot always be improved. That is, it is well known that there is a restriction for a value Q expressed by the following equation:

$$Q = \frac{2\pi \lambda d}{n \Lambda^2}$$

where λ represents the wavelength of the beam, d the thickness of the photo-sensitive layer K (the lens portion HL), n the refractive index of the photo-sensitive layer K (the lens portion HL), and Λ the pitch of the grating.

In general, if the value Q is changed by changing d or Λ, the intensity of the diffraction beam at each order is changed. In this case, when the value Q is selected to be much greater than unity, the intensity of the primary diffraction beam becomes extremely large and the diffraction beams of other orders are suppressed. When λ, n and d are respectively constant, the condition that Q be much greater than unity can easily be satisfied if the grating pitch Λ is selected smaller.

Therefore, Figure 16 shows an example of the diffraction efficiency distribution at the aperture face of the in-line hologram lens portion HL of the in-line hologram lens IN-L. This lens IN-L is recorded and produced by a krypton laser light source (the wavelength of the laser beam is 647.1 nm) and a mother lens with N.A. of 0.4. Figure 16 is a graph showing by curves the characteristics of the intensity of the +primary diffraction beam relative to distance from the centre of the diameter direction of the lens portion HL in the case where the He—Ne laser light source (the wavelength of the laser beam is 632.8 nm) is employed as the reproducing laser light source, and the thickness d of the in-line hologram portion HL of the in-line hologram lens IN-L is varied as 5 to 15 μm. According to this graph, it is understood that the intensity of the +primary diffraction beam at the centre of the lens portion HL, or the diffraction efficiency is greatly lowered as compared with those of other portions.

Accordingly, although the graphic interference patterns are not formed at the centre portion of the lens portion HL in the in-line hologram lens IN-L due to the recording reference wave beam B being lost at the central portion thereof, the efficiency of the in-line hologram lens will be almost unaffected.

## Claims

1. A method of producing an in-line hologram lens (IN-L), comprising the steps of:

irradiating a spherical wave beam from an optical element (L1) through a window (W) in a full reflection mirror (MR) onto a hologram recording medium (HR1) as a subject wave beam (A); and

irradiating a substantially plane wave beam reflected by said mirror (MR) onto said hologram recording medium (HR1) as a reference wave beam (B);

characterised in that for producing a hologram lens (IN-L) for use as the objective lens (IN-L) of a reading head of an optical record player wherein a reading beam (A') from said objective lens (IN-L) irradiates a record medium (RD) through a transparent substrate (DB) of said record medium (RD), a transparent plate (V, W) is placed into the light path so that, prior to impinging on said hologram recording medium (HR1), said spherical subject wave beam (A) passes through the transparent plate (V, W) the optical path length (t) of which is selected to compensate for spherical aberration developed in said reading beam (A') due to passing through said transparent substrate (DB).

2. A method according to claim 1 wherein said transparent plate (V, W) is a separate transparent plate (V) disposed between said mirror (MR) and said hologram recording medium (HR1).

3. A method according to claim 1 wherein said transparent plate (V, W) is formed by that part of a transparent substrate of said mirror (MR) where said window (W) is formed.

4. A method according to claim 1, claim 2 or claim 3 wherein the diameter of the hologram lens (IN-L) is 2 mm and the diameter of said window (W) is 100 μm.

5. An in-line hologram lens (IN-L) produced by a method according to any one of the preceding claims.

## Patentansprüche

1. Verfahren zur Herstellung einer In-Line-Hologrammlinse (IN-L), mit Schritten zum

Abstrahlen eines sphärischen Wellenstrahls von einem optischen Element (L1) durch ein Fenster (W) in einem Vollreflexionsspiegel (MR) auf ein Hologrammaufzeichnungsmedium (HR1) als ein Subjektwellenstrahl (A) und

Abstrahlen eines im wesentlichen planen Wellenstrahls, der durch den Spiegel (MR) reflektiert wird, auf das Hologrammaufzeichnungsmedium (HR1) als ein Referenzwellenstrahl (B),

dadurch gekennzeichnet,

daß zur Herstellung einer Hologrammlinse (IN-L) zur Verwendung als die Objectivlinse (IN-L) eines Lesekopfes eines optischen Plattenspielers, in dem ein Lesestrahl (A') von der Objektivlinse (IN-L) ein Aufzeichnungsmedium (RD) durch ein transparentes Substrat (DB) des Aufzeichnungsmediums (RD) bestrahlt, eine transparente Platte (V, W) in den Lichtweg eingesetzt ist, so daß der sphärische Subjektwellenstrahl (A) vor dem Auftreffen auf dem Hologrammaufzeichnungsmedium (HR1) durch die transparente Platte (V, W) verläuft, deren optische Weglänge (t) so gewählt ist, daß sie die sphärische Aberration kompensiert, die in dem Lesestrahl (A') aufgrund des Durchtretens durch das transparente Substrat (DB) entwickelt wird.

2. Verfahren nach Anspruch 1, bei dem die transparente Platte (V, W) eine separate transparente Platte (V) ist, die zwischen dem Spiegel (MR) und dem Hologrammaufzeichnungsmedium (HR1) angeordnet ist.

3. Verfahren nach Anspruch 1, bei dem die transparente Platte (V, W) durch den Teil eines transparenten Substrats des Spiegels (MR) gebildet wird, in dem das Fenster (W) ausgebildet ist.

4. Verfahren nach Anspruch 1, 2 oder 3, bei dem der Durchmesser der Hologrammlinse (IN-L) 2 mm beträgt und der Durchmesser des Fensters (W) 100 μm beträgt.

5. In-Line-Hologrammlinse (IN-L), die durch ein Verfahren nach einem der vorhergehenden Ansprüche hergestellt ist.

**Revendications**

1. Procédé de production d'une lentille d'hologramme en ligne (IN-L), comprenant les opérations suivantes:

envoyer un faisceau d'ondes sphériques depuis un élément optique (L1) au travers d'une fenêtre (W) ménagée dans un miroir totalement réfléchissant (MR) sur un support d'enregistrement d'hologramme (HR1) comme faisceau d'ondes du sujet (A); et

envoyer un faisceau d'ondes sensiblement planes réfléchi par ledit miroir (MR) sur ledit support d'enregistrement d'hologramme (HR1) au titre de faisceau d'ondes de référence (B);

caractérisé en ce que, pour la production d'une lentille d'hologramme (IN-L) destinée à être utilisée comme l'objectif optique (IN-L) d'une tête de lecture d'un lecteur d'enregistrements optiques, où un faisceau de lecture (A') venant dudit objectif optique (IN-L) tombe sur un support d'enregistrement (RD) au travers d'un substrat transparent (DB) dudit support d'enregistrement (RD), on place une plaque transparente (V, W) dans le trajet lumineux, de sorte que, avant de tomber sur ledit support d'enregistrement d'hologramme (HR1), le faisceau d'ondes du sujet sphériques (A) passe à travers la plaque transparente (V, W) dont la longueur de trajet optique (t) est choisie de manière à compenser les aberrations sphériques créées dans ledit faisceau de lecture (A') en raison du passage au travers dudit substrat transparent (DB).

2. Procédé selon la revendication 1, où ladite plaque transparent (V, W), est une plaque transparente distincte (V) disposée entre ledit miroir (MR) et ledit support d'enregistrement d'hologramme (HR1).

3. Procédé selon la revendication 1, où ladite plaque transparente (V, W) est formée par la partie d'un substrat transparent dudit miroir (MR) où ladite fenêtre (W) est formée.

4. Procédé selon la revendication 1, 2 ou 3, où le diamètre de la lentille d'hologramme (IN-L) est 2 mm et le diamètre de ladite fenêtre (W) est 100 µm.

5. Lentille d'hologramme en ligne (IN-L) produite par un procédé selon l'une quelconque des revendications précédentes.

*FIG. 1*

*FIG. 2*

*FIG. 3*

*FIG. 4*

*FIG. 5*

*FIG. 6*

*FIG. 7*

## FIG. 8

## FIG. 9

## F I G. 10

## F I G. 11

## F I G. 12

## F I G. 13

## F I G. 14

## F I G. 15

IN-L   BS   K

HR₁

## F I G. 16

INTENSITY OF DIFFRACTED LIGHT BEAM ⟶

d=50μm   d=15μm

d=5μm

EDGE   CENTER   EDGE

DISTANCE ⟶